# EUROPÄISCHE PATENTSCHRIFT

(11) **EP 1 585 606 B1**
(45) Veröffentlichungstag und Bekanntmachung des Hinweises auf die Patenterteilung: **08.04.2015**
(21) Anmeldenummer: 04702676.0
(22) Anmeldetag: 16.01.2004
(51) Int. Cl.: B21B 31/07, F16C 13/02, F16C 33/10

(54) **EINBAUSTÜCK ZUR AUFNAHME EINES WALZENZAPFENS**
MOUNTING PIECE FOR A ROLL PIN
SUPPORT POUR RECEVOIR UN TOURILLON DE CYLINDRE

(30) Priorität: 22.01.2003 DE 10302271
(43) Veröffentlichungstag der Anmeldung: 19.10.2005
(73) Patentinhaber: SMS Siemag AG, 40237 Düsseldorf (DE)
(72) Erfinder: KELLER, Karl, 57271 Hilchenbach (DE)
(74) Vertreter: Klüppel, Walter
(86) Internationale Anmeldenummer: PCT/EP2004/000279
(87) Internationale Veröffentlichungsnummer: WO 2004/065031

(56) Entgegenhaltungen:
- EP-A- 0 285 333
- GB-A- 191 415 611
- US-A- 3 433 542
- US-A- 4 285 551

## Beschreibung

Die Erfindung betrifft ein Einbaustück zur Aufnahme des Walzenzapfens einer in der Stahl- und Nichteisenmetallbearbeitung verwendeten Walze gemäss dem Obenbegriff des Anspruch 1. Ein solches Einbaustück ist aus EP 285 333 A bekannt.

Ein solches Einbaustück ist aus der US 4,285,551 bekannt. GB 15 611 empfiehlt, Aufnahmeräume zum zeitweisen Speichern von Schmiermittel in dem Einbaustück selber vorzusehen, zusätzlich zu (den) Aufnahmeräumen im Walzenzapfen. US-A-3 433 542 offenbart ein Beispiel für einen Aufnahmeraum.

Walzenzapfenlager, insbesondere Morgoil - Walzenzapfenlager, werden im Walzwerksbau seit Jahrzehnten eingesetzt. Hierbei sind alle lasttragenden Lagerteile einschließlich der Befestigungselemente und Dichtungen in einem Lagergehäuse, dem sogenannten Einbaustück, untergebracht.

Auf den Zapfen der Walzen, den Walzenzapfen, befinden sich Zapfenbuchsen. Zusammen mit der Lagerbuchse bilden die Zapfenbuchsen ein Radiallager, wobei die Lagerbuchse im Einbaustück festgelegt ist. Die Lagerbuchse umschließt dabei die Zapfenbuchse.

Zwischen der äußeren Oberfläche der Zapfenbuchse und der inneren Oberfläche der Lagerbuchse befindet sich ein Ölfilm, der den metallischen Kontakt der Lagergleitflächen ausschließt. Das Öl wird kontinuierlich durch das Lager gedrückt. Dieses bedeutet, dass sich das Öl in einem Kreislauf befindet. Der Einlauf des Öls in das Radiallager erfolgt durch Öleinlauftaschen. Diese befinden sich in der Lagerbuchse und werden durch Leitungen, die in den Einbaustücken als Bohrungen ausgeführt sind, mit Öl aus einem Öltank versorgt.

Durch den konstanten Druck der Ölpumpen gelangt das Öl auf die Lagergleitflächen und verteilt sich dort. Überschüssiges Öl tritt an den beiden Seitenkanten aus, wird dort aufgefangen und über Ablaufleitungen zum Öltank zurückgeführt.

Damit beim Walzen kein Öl aus den Lagern auf das Walzgut gelangt, befindet sich auf der Ballenseite eine Abdichtung. Die Abdichtung eines Ölfilmlagers kann durch ein formgepreßtes Gummiprofil erfolgen. Die Abdichtung bewirkt, dass das aus dem Lager austretende Öl in Hohlräume des Einbaustückes gelangt, von wo eine Weiterleitung erfolgt.

Die Weiterleitung des auf der Ballenseite in Auffangkammern gesammelten Öls erfolgt bei bekannten Einbaustücken durch zwei Bohrungen, welche die Ballenseite mit der Ablaufseite verbinden. Die Bohrungen befinden sich unterhalb des tiefsten Lagerpunktes. Das Öl fließt durch die Bohrungen zu einem Ölauffangraum auf der Außenseite des Einbaustückes. Von hier aus wird das Öl über zwei Bohrungsanschlüsse üblicherweise durch bewegliche Schläuche in die Rücklaufleitung zum Öltank geführt.

Beim Betrieb eines Walzwerkes kann die Funktion der ballenseitigen Abdichtung gestört werden. Beispielsweise läuft die Dichtungslippe der ballenseitgen Abdichtung durch einen Anstieg des Öls in der Auffangkammer in einem Ölsumpf. Eine weitere Störung beruht beispielsweise auf den Verschleiß der Lichtlippen einer Abdichtung. Die Eigenschaften der Dichtungslippe verändern sich in der Weise, dass Öl austreten kann. Dieses führt zu einer Ölleckage und zu großen Ölmengenverlusten. Bei Kaltstraßen erfolgt durch den Ölaustritt z.B. eine Bandbeschmutzung, welche die Qualität des Produktes beeinträchtigt.

Aus der EP 0 285 333 B1 ist eine Lagerbuchse bekannt, die durch einen in der Lagermitte befindlichen Ringkanal in zwei Lagerstellen aufgeteilt ist. Über diesen Ringkanal werden ca. 50 % des aus dem Lager abfließenden Öls abgeleitet. Das ballenseitige Dichtungssystem wird nur noch mit der Hälfte der üblichen Ölmenge belastet. Die Möglichkeit, dass Öl unkontrolliert austritt, wird verringert.

Hierbei ist es notwendig, beide Bereiche der Lagerbuchse mit einem eigenen Einlass, durch welchen Öl der Innenlagerfläche zugeführt wird, auszustatten. Weiterhin sind in dem Ringkanal Auslassöffnungen zur Abführung des Öls eingebracht. Diese zusätzlichen Maßnahmen bewirken einen erhöhten Herstellungsaufwand.

Der Erfindung liegt daher die Aufgabe zugrunde, ein Einbaustück der eingangs beschriebenen Art alternativ auszubilden.

Diese Aufgabe wird erfindungsgemäß durch den Gegenstand des Anspruchs 1 gelöst. Indem das Schmiermittel in zusätzlichen Schmiermittelaufnahmeräumen in dem Einbaustück aufgefangen wird, kann der Kontakt der Dichtungslippe der ballenseitigen Abdichtung mit dem Schmiermittel reduziert und das Einbaustück wirtschaftlich hergestellt werden.

Als Ausgestaltung wird vorgeschlagen, dass auf der Ballenseite mindestens vier Schmiermittelaufnahmeräume vorhanden sind.

In Weiterbildung dieser Bauweise wird vorgeschlagen, dass die zusätzlichen ballenseitigen Schmiermittelaufnahmeräume durch separate Bohrungen mit Schmiermittelaufnahmeräumen auf der Ablaufseite verbunden sind.

Als eine Weiterentwicklung ist vorgesehen, dass die rückfließenden Schmiermittelströme auf der Ablaufseite zusammengeführt werden. Von dort werden sie gemeinsam in Vorratstanks geleitet, wo das Öl gereinigt und / oder gekühlt wird.

Das in den Aufnahmeräumen gelangte Schmiermittel wird durch Bohrungen auf die Ablaufseite geleitet. Hierdurch wird erreicht, dass sich die Schmiermittelmenge in den bisher bekannten unteren Aufnahmeräumen verringert. Die Höhe des Schmiermittelstandes wird im unteren Bereich gesenkt und die Dichtlippen des ballenseitigen Dichtungssystems z.B. laufen nicht mehr in einem Schmiermittelsumpf.

Die Erfindung wird anhand von sehr schematischen Zeichnungen näher beschrieben. Es zeigen:

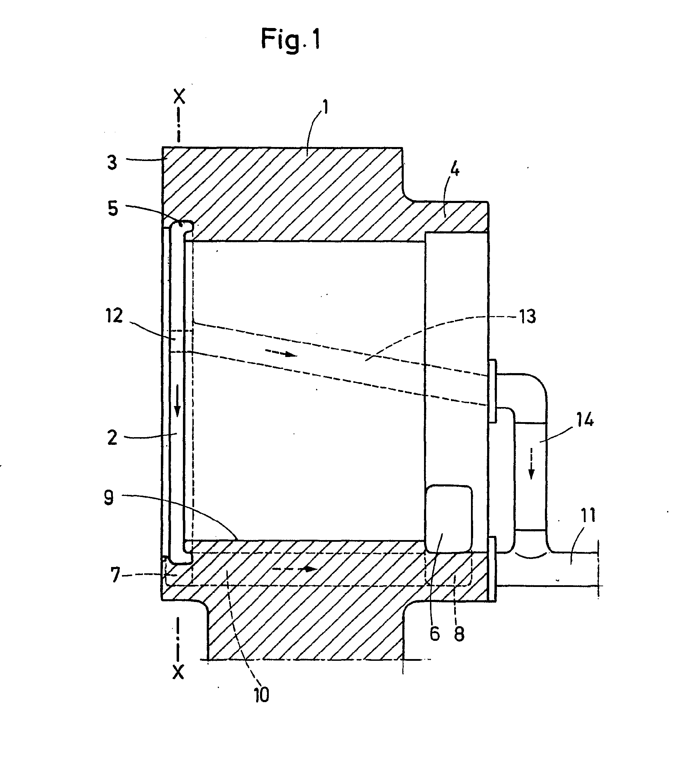

- Fig. 1: einen Halbschnitt eines Einbaustückes und
- Fig. 2: eine Frontalansicht des Einbaustückes aus Fig. 1 entlang der Schnittebene X - X

In dem Einbaustück 1 wird ein Walzenzapfen (nicht dargestellt) durch eine Zapfenbuchs (nicht dargestellt) und eine Lagerbuchse (nicht dargestellt) gelagert. Während die Zapfenbuchse drehfest mit dem Walzenzapfen verbunden ist, wird die Lagerbuchse im Einbaustück 1 festgelegt. Zwischen Lagerbuchse und Zapfenbuchse befindet sich ein kontinuierlicher Schmiermittelfilm. Das Schmiermittel 2 gelangt durch ein Schmiermittelumlaufsystem über Schmiermitteleinlauftaschen in den Spalt zwischen Lagerbuchse und Zapfenbuchse. Bei einer symmetrischen Lastverteilung wird das Schmiermittel 2 je zur Hälfte auf der Ballenseite 3 und der Abflaufseite 4 ablaufen. Zur Ableitung des Schmiermittels 2 sind in dem Einbaustück 1 auf der Ballenseite 3 und der Ablaufseite 4 umlaufende Schmiermittelauffangrinnen 5, 6 eingearbeitet. Diese Schmiermittelauffangrinnen 5, 6 werden im unteren Bereich erweitert zu zwei Schmiermittelaufnahmeräumen 7, 8 , die sich unterhalb des tiefsten Punktes 9 der Lagerbuchse befinden.

Die bekannte, unten im Einbaustück 1 angeordnete Bohrung 10 bewirkt ein Ableiten des Schmiermittels 2 aus dem Schmiermittelaufnahmeraum 7 auf der Ballenseite 3 zur Ablaufseite 4 des Einbaustückes 1. Das Schmiermittel 2 wird auf der Ablaufseite 4 in einem Schmiermittelaufnahmeraum 8 aufgefangen und von dort über einen beweglichen Schlauch 11 zu einem nicht dargestellten Schmiermitteltank geführt.
Dort kann das Schmiermittel 2 gereinigt und / oder gekühlt werden, um anschließend wieder in das Lager gefördert zu werden.
Zur besseren Ableitung des Schmiermittels 2 befindet sich oberhalb der Mittelebene ein weiterer Schmiermittelaufnahmeraum 12. Dieser Schmiermittelaufnahmeraum 12 ist durch eine Bohrung 13 mit der Ablaufseite 4 verbunden. Das Schmiermittel 2 wird auf der Ablaufseite 4 durch ein Verbindungsstück 14 in den Schlauch 11 geleitet.

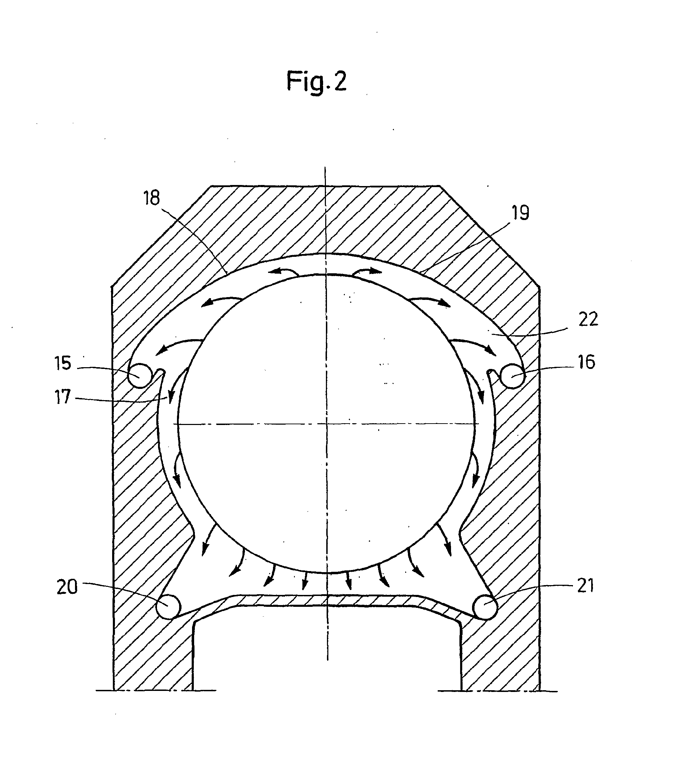

Die Fig. 2 zeigt beispielsweise die Lage von zwei zusätzlichen Schmiermittelaufnahmeräumen 15 und 16. Diese befinden sich hier oberhalb der Mittelebene. Je nach Drehrichtung der Walze werden die Schmiermitteltropfen 17 verstärkt an die Außenflächen 18 oder 19 der Schmiermittelauffangrinne 22 geschleudert.

Von dort kann das Schmiermittel 2 in die Schmiermittelaufnahmeräume 15 oder 16 abfließen. Das Schmiermittel 2, welches unterhalb der Schmiermittelaufnahmeräume 15, 16 austritt, wird in die unteren Schmiermittelaufnahmeräume 20, 21 geleitet.

Die gezeigte Ausführung eines Einbaustückes 1 mit vier Schmiermittelaufnahmeräumen 15, 16, 20 und 21 und somit auch vier Bohrungen ist als Beispiel zu sehen. Je nach Ausführung des Einbaustückes 1 können auch weitere Schmiermittelaufnahmeräume und Bohrungen berücksichtigt werden.

### Bezugszeichenübersicht

- 1: Einbaustück
- 2: Schmiermittel
- 3: Ballenseite
- 4: Ablaufseite
- 5: Schmiermittelauffangrinne
- 6: Schmiermittelauffangrinne
- 7: unterer Schmiermittelaufnahmeraum
- 8: unterer Schmiermittelaufnahmeraum
- 9: tiefster Punkt der Lagerbuchse
- 10: Bohrung
- 11: Schlauch
- 12: Schmiermittelaufnahmeraum
- 13: Bohrung
- 14: Verbindungsstück
- 15: oberer Schmiermittelaufnahmeraum
- 16: oberer Schmiermittelaufnahmeraum
- 17: Schmiermitteltropfen
- 18: Außenfläche
- 19: Außenfläche
- 20: Schmiermittelaufnahmeraum
- 21: Schmiermittelaufnahmeraum
- 22: Schmiermittelauffangrinne

## Patentansprüche

1. Einbaustück zur Aufnahme des Walzenzapfens einer in der Stahl- und Nichteisenmetallbearbeitung verwendeten Walze, mit mindestens einem Schmiermittelaufnahmeraum auf der Ballenseite und mit mindestens einem Schmiermittelaufnahmeraum auf der Abflussseite, welche unterhalb des tiefsten Lagerpunktes angeordnet sind, sowie Verbindungsbohrungen zwischen den Schmiermittelaufnahmeräumen auf der Ballen- und der Ablaufseite,
**dadurch gekennzeichnet**,
dass das Schmiermittel (2) in zusätzlichen oberhalb oder in Höhe der Mittelebene angeordneten Schmiermittelaufnahmeräumen (12, 15, 16) aufgefangen wird; und
dass die zusätzlichen ballenseitigen Schmiermittelaufnahmeräume (15, 16) durch separate Bohrungen (13) mit Schmiermittelaufnahmeräumen auf der Ablaufseite (4) verbunden sind.

2. Einbaustück nach Anspruch 1,
**dadurch gekennzeichnet**,
dass auf der Ballenseite (3) mindestens vier Schmiermittelaufnahmeräume (15, 16, 20, 21) vorhanden sind.

3. Einbaustück nach Anspruch 2,
**dadurch gekennzeichnet**,
dass die rückfließenden Schmiermittelströme auf der Ablaufseite (4) zusammengeführt werden.

## Claims

1. Chock for mounting the roll pin of a roll used in steel processing and non-ferrous metal processing, with at least one lubricant receiving chamber on the roll-body side and with at least one lubricant receiving chamber on the outflow side, which chambers are arranged below the deepest bearing point, as well as connecting bores between the lubricant receiving chambers on the roll-body side and outflow side, **characterised in that** the lubricant (2) is collected in additional lubricant receiving chambers (12, 15, 16) arranged above or at the level of the centre plane; and that the additional lubricant receiving chambers (15, 16) at the roll-body side are connected by separate bores (13) with lubricant receiving chambers on the outflow side (4).

2. Chock according to claim 1, **characterised in that** at least four lubricant receiving chambers (15, 16, 20, 21) are present on the roll-body side (3).

3. Chock according to claim 2, **characterised in that** the lubricant flows flowing back are led together on the outflow side (4).

## Revendications

1. Empoise pour la réception du tourillon d'un cylindre utilisé dans le traitement d'acier et de métaux non-ferreux, comprenant au moins un espace de réception de lubrifiant du côté du corps du cylindre et au moins un espace de réception de lubrifiant du côté de la vidange, qui sont disposés en dessous du point d'appui le plus bas, ainsi que des alésages de liaison entre les espaces de réception de lubrifiant du côté du corps du cylindre et du côté de la vidange, **caractérisée en ce que** le lubrifiant (2) est récolté dans des espaces de réception de lubrifiant (12, 15, 16) supplémentaires disposés au-dessus ou à hauteur du plan médian, et **en ce que** les espaces de réception de lubrifiant supplémentaires (15, 16) du côté du corps du cylindre sont reliés par des alésages séparés (13) à des espaces de réception de lubrifiant du côté de la vidange (4).

2. Empoise selon la revendication 1, **caractérisée en ce qu'**au moins quatre espaces de réception de lubrifiant (15, 16, 20, 21) sont présents du côté du corps du cylindre (3).

3. Empoise selon la revendication 2, **caractérisée en ce que** les courants de lubrifiant circulant en retour sont guidés de manière conjointe du côté de la vidange (4).
